# EUROPEAN PATENT APPLICATION

(11) **EP 1 255 174 A1**
(43) Date of publication of application: **06.11.2002**
(21) Application number: 01110635.8
(22) Date of filing: 30.04.2001
(51) Int. Cl.: G05B 11/01, G05B 24/02, F04D 27/00, F04D 15/00

(54) **Electric Pump with automatic on-off device**

(71) Applicant: Starite S.p.A., 56010 Lugnano - Pisa (IT)
(72) Inventor: Landini, Massimo, 57100 Stagno - Livorno (IT)
(74) Representative: Celestino, Marco

(57) **Abstract**

A device for detection of the water flow of an electro-pump that requires a minimum water reserve, which does not give mechanical problems and is of low cost. The electro-pump (1) is supplied by a main circuit (2) connected (3) to the network and controlled by a switch (4) operated by a CPU (5) by means of a bus (6). The CPU (5) belongs to a electronic circuit board which, through the current absorption by the motor (1), in addition to the pressure measuring means of the pump, causes the water flow start, thus allowing the automation of the pump same. The CPU (5) works responsive to sensors of the current (7,8) absorbed and to pressure measuring means (9,10) for turning on or off the electrical feed of the motor. The current signal can be provided by an ammeter transformer (8), which detects the current absorption by the electro-pump, through an analog bus (9) of detection of the AC voltage at the secondary of the ammeter transformer, which is filtered and sent to the first analog/digital input (7) of the CPU (5).

## Description

### Field of the invention

The present invention relates to electro-pumps, and in particular it relates to an electro-pump equipped with a device for turning on and off the electro-pump according to the demand of the users.

### Description of the prior art

Problems arise when operating electro-pumps according to the demand of the users concentrated at start and. stop instants. Furthermore, the need is felt of reducing the rate of starts versus time.

Generally, for turning on and off the pump an electrical contact is known operated by the pressure of the pumped liquid by means of a pressure switch. In combination with the pressure switch a pressure tank is used, normally an hydrosphere, wherein a membrane of separation is provided that pre-loads the pressurized air. The hydrosphere pressurizes water inside, thus allowing control of pressure through the pressure switch. The number of starts of the electro-pump is determined by the capacity of the hydrosphere which, in most cases, contains about five litres of reserve on a total capacity of twenty-five litres. Drawback of the hydrosphere systems is related to the need of maintenance for loading the air, which progressively decreases for migration progressive of air into water.

Furthermore, electronic devices exist on the market for controlling the rate of starts of the pump: such systems operate according to a mechanical detection of the flow rate of the pump. More precisely, at the demand of water by the users, the pump is turned on and works for all the time of the demand. This is allowed control of water flow detected by a flow meter, normally carried out by a flow control valve or by a small turbine, as hydro/mechanical part of the device. The passage of water is detected electronically through a permanent magnet coupling, for example magnet/reed bulb or magnet/Hall effect transducer. In this way it is possible a considerable reduction of the pressurized water reserve. In fact, such devices store inside a few cubic centimetres of water reserve.

This detection system of the water flow of an electro-pump, however, creates mechanical problems. In fact, using flow meters or turbines immersed in the water raises problems of lock of the moving parts for fouling by limestone or dirt. This causes pump jamming or continuous work also without demand by the network.

### Summary of the invention

It is therefore object of the present invention to provide a device for detection of the water flow in an electro-pump that requires a minimum water reserve, that gives no mechanical problems and is of low cost.

According to a main aspect of the invention, a pump is equipped with an electronic circuit that, through the current absorption by the motor, in addition to the detection pressure measuring means of the pump, turns on the flow, thus allowing an automation of the pump same.

Therefore, the pump comprises
- an impeller arranged between a sucking and a delivery zone;
- a motor operating the impeller;
- means for measuring the current absorption by said motor;
- sensor means for measuring pressure at the delivery;
- electronic control means responsive to said current absorption measuring means and pressure measuring means for turning on or off the electrical feed of the motor.

In a preferred embodiment the electronic control means provide a CPU with a first A/D input for a current signal and a second A/D input for a pressure signal.

The current signal comes preferably from an ammeter transformer, which detects the current absorption by the electro-pump, said current resulting by an analog bus for detection of the AC voltage at the secondary of the ammeter transformer, which is filtered and sent to said first analog/digital input of the microprocessor.

Alternatively to the ammeter transformer, the means for measuring the current absorption by said motor are chosen among :
- a resistance in series to the motor, associated to means for measuring the voltage loss at the ends of said resistance;
- photo-coupling sensors;
- a Hall effect permanent magnet transducer.

The pressure signal comes preferably by a pressure sensor associated to said second A/D input of the CPU. In the CPU program means can furthermore be arranged for determining the flow rate of the pump according to the pressure/flow rate characteristic curve.

Advantageously, means are provided for controlling the variation of pressure, current and motor supply voltage, respectively for controlling:
- fluctuations caused by the electromechanical wear of the electro-pump and by the turbulence of the liquid;
- fluctuations of the current absorption by the motor caused by the turbulence of the impeller;
- variation of the network voltage with subsequent fluctuations on the current absorption (W= V x A).

The control of the fluctuations of the network voltage is possible by means of two resistances of the same value, located in series at the voltage supply and by providing to the CPU the electrical signal of the same, by electronically comparing the two values (positive and negative half-wave).

### Brief description of the drawings

Further characteristics and advantages of the method and of the device for detection of the water flow of an electro-pump will be made clearer with the following description of an embodiment thereof, exemplifying but not limitative, with reference to attached drawings wherein:
- figure 1 shows a diagrammatical view of a device according to the invention for controlling the start of an electro-pump;
- figure 2 shows a diagrammatical view of a different embodiment of the device of figure 1.

### Description of a preferred embodiment

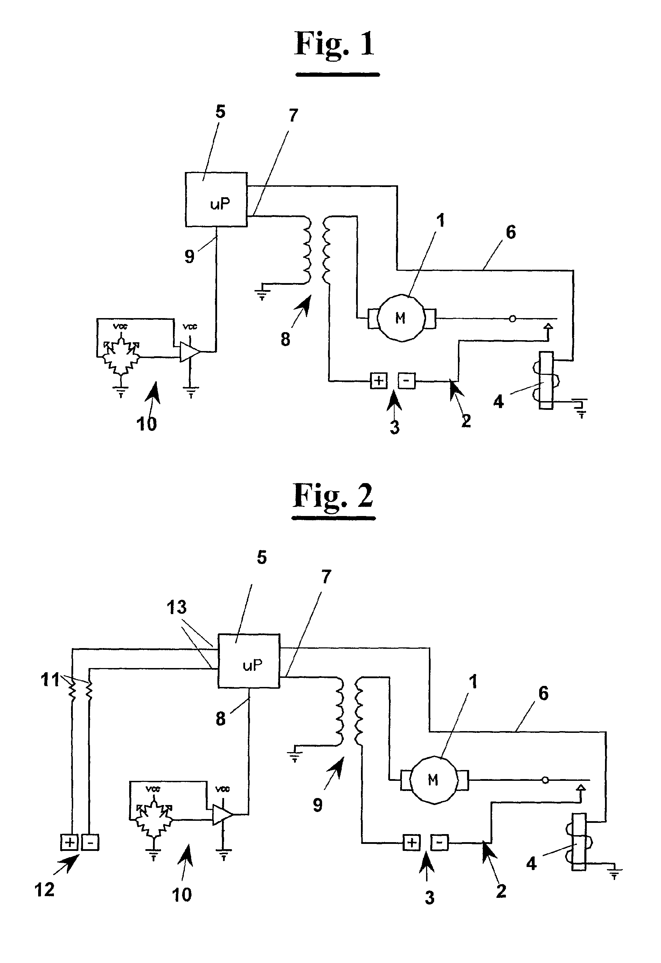

With reference to figure 1, an electro-pump of which motor 1 is shown diagrammatically is supplied by a main circuit 2 connected at 3 to a network and controlled by a switch 4 operated by a CPU 5 by means of a bus 6.

CPU 5 belongs to a electronic circuit board which, through the current absorption by motor 1, in addition to the pump pressure measure, causes the start of the flow, thus allowing the automation of the pump same. For the operation of the board a microprocessor is used with EEprom memory or with Flash memory with channels of analog/digital input. All the signals are rectified, filtered, smoothed and sent to the CPU which, loading them, decides to turn on or off motor 1 of the electro-pump.

In more detail, CPU 5 has a first A/D input indicated with 7 for a current signal coming from an ammeter transformer 8. Ammeter transformer 8 detects the current absorption by the electro-pump 1 resulting from the analog bus of detection of the AC voltage at the secondary of the transformer 8, which is filtered and sent to said first inlet 7. CPU 5 has then a second A/D inlet , indicated with 9, for a pressure signal coming from a transducer circuit 10 comprising a pressure sensor.

Furthermore in CPU 5 not shown software means can be arranged for determining the flow rate of the pump according to the pressure/flow rate characteristic curve of the pump same, stored in a known way.

The current absorption increases or decreases in a way responsive to the load demand. When the motor has a high load, the speed rate would decrease if the current absorption would not rise and the power with it, maintaining the characteristic speed.

In particular, for example, an induction squirrel-cage motor is commonly used for driving pumps. Such a motor is defined self-adjusting, i.e. the speed rate is responsive to frequency of the feeding line and is given by: number of poles /frequency of the network.

Therefore, except from the start-up phase, wherein the current absorption is normally about three-five times the nominal current, the absorption is responsive to the workload. Then, when the delivery of the pump is closed, i.e. the water flow rate is zero, if the motor is running the current absorption is at the minimum. By increasing gradually the demand of water the current absorption rises proportionally to the flow rate of the pump,

Advantageously, means are provided for controlling the variation of pressure and current. In fact:
- pressure is subject to fluctuations owing to the electromechanical wear of the electro-pump and to the turbulence of the liquid;
- current absorption by the motor is influenced by the turbulence of the impeller, with relative fluctuations given to pressure peaks.

The network voltage can fluctuate about +-15% with subsequent fluctuations on the current absorption (W= V x A) . With reference to figure 2, using two resistances 11 of the same value, arranged in series to the supply 12 and by measuring in 13 the electrical signal from the resistances same, when electronically comparing in CPU 5 the two values (positive and negative half-wave), a monitoring of the network fluctuations is obtained, which allows the possible correction of the reference parameters chosen.

In the preferred embodiment, the pump can comprise the following signals under electronic control:
- flow control by means of the detection of the current 7 of motor 1;
- control of the extra-current of motor 1, always by means of signal 7;
- pressure of water network of supply to the pump, by means of a silicon bridge static transducer 10, or adjustable pressure switch;
- control of the extra temperature of the body of the pump, by means of NTC sensor or temperature switch, not shown.
- control of the pump failure for lack of water, through the comparison of the flow rate 7 and pressure 8 signals.
- automatic reset start after lack of water with more attempts versus time.
- automatic test of self-adjustment of the various parameters.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Electro-pump automatic on-off device, said electro-pump comprising:
- an impeller arranged between a sucking and a delivery zone;
- an electric motor (1) for operating the impeller;
**characterised in that** it comprises:
- means (8) for measuring the current absorption by said motor;
- sensor means for measuring pressure (9) at the delivery zone;
- electronic control means (5) responsive to said current absorption measuring means (8) and to said pressure measuring means (10) for turning on or off the electrical feed of the motor (1).

2. Electro-pump automatic on-off device according to claim 1, wherein said electronic control means provide a CPU (5) with a first A/D input (7) for a signal proportional to said current (8) absorbed by said motor (1) and a second A/D input (9) for a signal proportional to said pressure (10) at the delivery.

3. Electro-pump automatic on-off device according to claim 2, wherein said a current signal comes by an ammeter transformer (8) that detects the current absorption by the electro-pump (1), said current resulting by an analog bus for detection of the AC voltage at the secondary of said ammeter transformer (8), which is filtered and sent to said first A/D input (7) of said CPU.

4. Electro-pump automatic on-off device according to claim 2, wherein said current signal comes from means for measuring the motor current absorption chosen among :
- a resistance in series to the motor, associated to moans for measuring the voltage loss at the ends of said resistance;
- photo-coupling sensors;
- a Hall effect permanent magnet transducer.

5. Electro-pump automatic on-off device according to claim 2, wherein said pressure signal comes preferably from a pressure sensor (10) associated to said second A/D input (9) of the CPU (5).

6. Electro-pump automatic on-off device according to claim 2, wherein in said CPU are arranged program means for determining the flow rate of the pump according to the characteristic pressure/flow rate curve.

7. Electro-pump automatic on-off device according to claim 1, wherein, means are provided for controlling the variation of pressure, current and motor supply voltage, respectively for controlling:
- fluctuations caused by the electromechanical wear of the electro-pump and by the turbulence of the liquid;
- fluctuations of the current absorption by the motor caused by the turbulence of the impeller;
- variation of the network voltage with subsequent fluctuations on the current absorption (W= V x A) .

8. Electro-pump automatic on-off device according to claim 7, wherein said control of the fluctuations of -the network voltage is possible by means of two resistances (11) of the same value, located in series to the feeding (12) and by supplying (13) to said CPU (5) the electrical signal through the resistances same, and then comparing the two values electronically.
